# EUROPEAN PATENT SPECIFICATION

(11) **EP 4 341 855 B1**
(45) Date of publication and mention of the grant of the patent: **02.12.2026**
(21) Application number: 21731452.5
(22) Date of filing: 07.06.2021
(51) Int. Cl.: G06K 19/077, D06H 1/04, G06K 19/02, G06K 19/07, H01Q 1/22, G08B 13/24

(54) **RFID DEVICE AND METHOD OF MANUFACTURING A MAIN ANTENNA OF AN RFID DEVICE**
RFID-GERÄT UND HERSTELLUNGSVERFAHREN EINER HAUPTANTENNE EINES RFID-GERÄTS
DISPOSITIF RFID ET PROCEDE DE FABRICATION D'UNE ANTENNE PRINCIPALE D'UN DISPOSITIF RFID

(43) Date of publication of application: 27.03.2024
(73) Proprietor: Assa Abloy AB, 107 23 Stockholm (SE)
(72) Inventor: FURTER, Urs, 1845 Noville (CH)
(74) Representative: Kramer Barske Schmidtchen Patentanwälte PartG mbB
(86) International application number: PCT/EP2021/065169
(87) International publication number: WO 2022/258137

(56) References cited:
- DE-A1- 102008 046 338
- US-A- 6 088 230
- US-A1- 2007 251 207
- US-A1- 2008 074 272
- US-A1- 2008 252 460
- US-A1- 2015 206 043
- US-A1- 2015 269 477
- US-A1- 2016 148 086
- US-A1- 2018 248 248
- US-A1- 2020 117 965

## Description

### Technical Field

The present disclosure generally relates to an RFID device and a method of manufacturing a main antenna of an RFID device.

### Background

UHF RFID devices generally include a main antenna and an integrated circuit which is coupled to the main antenna. In some UHF RFID devices, the integrated circuit comprises a chip antenna (also called feed loop antenna) which is electrically coupled to the integrated circuit and inductively coupled to the main antenna or radiating body. Such inductively coupled antennas are widely used for the advantage of their capability to efficiently communicate over a large frequency spectrum. Further, with an inductively coupled chip antenna and main antenna, the connection point between the integrated circuit and the antenna (the chip antenna) can be made very reliable in terms of mechanical and thermal stress resistance as the chip antenna and the integrated circuit may be provided together on a small and robust unit which is then coupled with the main antenna.

A known method to produce a main antenna of such an RFID device is to embroider or stitch a multi-strand wire on a substrate to form the main antenna.

A multi-strand wire comprises a bunch of several single wires bunched together to form one (thick) conductor. The several single wires do not comprise an individual insulation, but the one (thick) conductor formed by the several single wires is enclosed by a single insulation.

With the embroidery/stitching method, the substrate material, in which the main antenna is stitched, as well as the wire material need to resist the process and therefore the materials to be used are limited in type and thickness.

A further known method to produce a main antenna of an RFID device is to use ultrasonic vibrations to embed the main antenna into the substrate. Using the embedding method, either a multi-strand wire or one single-strand wire is embedded into the substrate.

In contrary to a multi-strand wire, in a single-strand wire the conductor is formed by a single wire. The single-strand wire may comprise an insulation, but also may be used without insulation.

The embedding technology may be performed with a so called sonotrode. A sonotrode is an ultrasonic tool that creates ultrasonic vibrations and applies this vibrational energy to the wire, respectively the substrate to melt the substrate. The wire is guided through an embedding nozzle of the sonotrode. The embedding nozzle moves along the surface of the substrate and thus forms the geometry of the antenna. The embedding nozzle in addition may function as the part of the sonotrode that applies the vibrational energy to the wire/the substrate. Alternatively, such part of the sonotrode is provided separately from the embedding nozzle.

In general, a disadvantage of inductively coupled main antennas compared to electrically coupled main antennas is the reduced performance of the RFID device induced by the coupling losses. The RFID's performance refers to the ability to convert the radio waves irradiating the main antenna into electrical power to be used by the integrated circuit.

US 2018 / 0248248 A1 describes an antenna for use in an RFID tag. The antenna comprises an antenna yarn. The antenna yarn comprises metal fibers. The metal fibers are stainless steel fibers. The antenna yam is wrapped by at least one wrapping yam thereby covering the full surface of the antenna yarn or of the metal wire or of the bundle of metal wires. The at least one wrapping yarn comprises non-electrically conductive fibers.

In US 2016 / 0148086 A1 a radio frequency identification tag is disclosed. The radio frequency identification (RFID) tag is particularly suitable for use as a linen or laundry tag. Tue RFID tag in one embodiment comprises a backing layer, a first adhesive layer overlaying the backing layer, an RFID transponder and antenna overlaying the first adhesive layer, and a second adhesive layer overlaying the RFID transponder and antenna. The layers are laminated together, hermetically sealing the RFID transponder and antenna within the RFID tag.

In US 2008 / 0074272 A1 a textile information carrier is described. This consists of a textile label or textile goods or a tag connected to the goods comprising an electric antenna and a detection wafer comprising an electronic chip module, connected to the textile label, textile goods or the tag. A coupling element connected to the electronic chip module is disposed on the detection wafer, said coupling element being inductively and/or capacitively coupled to the electric antenna of the textile label, the textile goods or the tag.

US 2008 / 0252460 A1 relates to a method and device for protection against remote readout of goods identification data.

DE 10 2008 046 338 A1 relates to an identification means for contactless data transmission, comprising a carrier with a chip and an antenna device in form of an electrically conductive yarn.

US 2015 / 0206043 A1 describes a textile structure, which includes two yarns, a radio frequency identification (RFID) chip, and two antennas. The antennas are each electrically connected with the RFID chip. The antennas are respectively combined with the yarns. As such, with the combination of the yarns with the antennas, no tactile perception of irregularity will be sensed when a user touches and also, the comfortableness of wearing can be enhanced.

The present disclosure is directed, at least in part, to improving or overcoming one or more aspects of prior systems.

### Summary of the Disclosure

The invention is defined by the independent claims.

Preferred embodiments are set out in the dependent claims.

Other features and aspects of this disclosure will be apparent from the following description and the accompanying drawings.

### Brief Description of the Drawings

Fig. 1 shows a plan view on an RFID device in accordance with the present disclosure;
Fig. 2 is an enlarged view of section A of the RFID device shown in Fig. 1.
Fig. 3 shows an ultrasonic embedding nozzle while embedding two single-strand wires into a substrate.
Fig. 4 shows a cross sectional view along the line A-A in Fig. 3.
Fig. 5 shows a substrate in which a plurality of main antennas are embedded and connected to each other.
Fig. 6 shows five single-strand wires which comprise an insulation and are positioned adjacent to each other.
Fig. 7 shows the cross-section of a single-strand wire.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

The present disclosure is based at least in part on the realization that it may be advantageous to use multiple single-strand wires positioned adjacent to each other to form a main antenna of a RFID device instead of one single-strand wire or one multi-strand wire. The use of one single-strand wire does not result in a high performance of the RFID device and the use of one multi-strand wire results in high material costs for that type of wire.

The use of multiple single-strand wires to form the main antenna enhances the performance of the antenna of the RFID device. Further, by using multiple single-strand wires instead of a multi-strand wire, the cost only slightly increases. The multiple single-strand wires may be embedded by using a single ultrasonic embedding nozzle and by simultaneously passing the multiple single-strand wires through that single ultrasonic embedding nozzle. It has been realized that the same machines as used for the manufacturing of antennas comprising one single-strand wire may be used for the manufacturing of antennas comprising multiple single-strand wires as well. Therefore, the process costs do not increase. With the method disclosed herein, improved inductively coupled UHF RFID devices may be obtained which may be used for industrial RFID devices, harsh environment labels, card RFID or laundry RFID applications, but also for other applications.

In addition, it has been realized that with the method disclosed herein a main antenna may be realized in which the distance between the multiple single-strand wires at least partially varies. The distance may be zero when one single-strand wire touches another single-strand wire. In the sections in which two single-strand wires touch each other, these two single-strand wires may bond together if the single-strand wires are provided with a bonding coating layer.

Further, it has been realized that with the method disclosed herein a main antenna can be realized in which two single-strand wires overlap each other. Overlapping in the sense of this disclosure means that a single-strand wire overlaps or overlays another single-strand wire in the thickness direction of the substrate or that a single-strand wire crosses another single-strand wire above or below that another single-strand wire when viewed in the thickness direction.

The multiple single-strand wires fed into a single embedding nozzle will overlap or overlay or cross each other at least partly in a random or non-controlled way. The random overlap/crossing will be at least dependent on the embedding substrate, the inner diameter and shape of the embedding nozzle, the diameter of the multiple-single strand wires and the embedding parameters (power, speed, force, direction). Further, it may be dependent on the natural twist from the multiple single-strand wires induced by the unwinding from a master spool.

Due to the varying distance and the overlapping of the single-strand wires a compact form of the arrangement of multiple single-strand wires in the lateral direction (perpendicular to the thickness direction) may be realized.

Further, it has been realized that the multiple single-strand wires which are fed into the ultrasonic embedding nozzle may be subjected to mechanical stresses or a twist. Such a twist for example may be induced by means of the unwinding process of the wires from the supply spool or master spool before entering the ultrasonic embedding nozzle. Such stresses increase the overlapping/crossing of the multiple single-strand wires.

The maximum distance between single-strand wires of the multiple single-strand wires depends on the inner diameter of the ultrasonic embedding nozzle and the outer diameter and number of single-strand wires which simultaneously pass through that ultrasonic embedding nozzle. Preferably, the maximum distance between single-strand wires is less than twice the used single-strand wire's outer diameter.

In a preferred embodiment of the RFID device, the main antenna is formed by two to five single-strand wires.

It has been realized that the optimal performance of the RFID device is obtained with two to five single-strand wires. Higher number of wires will increase the costs of the RFID device without significant enhancement of its performance.

With two to five single-strand wires, the performance of the RFID device may be enhanced by 30% to 50% with very low material cost increase and no process cost increase.

Preferably, the antenna shape of the RFID device is a dipole antenna including a meander form. This allows to decrease the overall dimension of the tag but keeping the half wave length dimension for the main antenna's length.

In a further preferred embodiment, the antenna shape of the RFID device includes a zic-zac structure. Such zic-zac structure may be used to adjust the capacitive properties of the main antenna.

Further, to reduce changes of the antenna's performance in proximity to metal objects, a further antenna may be embedded on the other side of the substrate such that the substrate is provided with an antenna on both sides and such that the substrate includes additional capacitive structures acting as surface shielding against the metallic mounting surface. Those antenna designs may include small zic-zac structures.

The length of the main antenna or the embedded wire length is preferably in the range of 1.5 cm to 38 cm. Consequently, the optimal frequency for such main antennas is in the range of 400 MHz to 10 GHz.

Preferably, each one of the multiple single-strand wires comprises a conductor with a diameter in the range of 30 µm to 150 µm. The conductor material can be of any conductive metal or metal alloy material.

Preferably, each one of the multiple single-strand wires comprises an insulation. Such an insulation may comprise a base coating and/or a bond coating.

The base coating is a thermoset insulation layer which surrounds the conductive core. The base coating may be omitted.

The bond coating is a thermosoft layer which surrounds the conductive core and the base coating. The bond coating has thermo-adherent properties such as Polyvinylbutyral or Poyamide based coatings. The bond coating improves the fixing of the wires to the embedding substrate. Further, the bond coating may contribute to bond the multiple single strand wires together during the embedding process of the antenna to obtain a mechanically bonded wire structure. However, if the substrate in which the multiple single-strand wires are embedded has good bonding properties during embedding as for example a PU (Polyurethane), the thermo-adherent bond coating may be omitted.

The thickness of the insulation and/or the bond coating of a single-strand wire may be around 5% to 15% of the conductive diameter of that single-strand wire. Too much of the thermo-adherent coating will obstruct the embedding nozzle with excessive melted wire coating.

The material of the substrate has to be a non-conductive material allowing a sufficient adhesion of the thermo-adherent insulation on the substrate. The substrate may be a thermo-soft polymer and/or a thermo-set polymer and/or a wooden surface and/or a woven or non-woven textile based on natural or synthetic fibers.

Referring now to the method for manufacturing a main antenna of a RFID device, the wire guiding device may be displaced along a surface of the substrate to form a plurality of main antennas connected to each other. Subsequently, the plurality of main antennas may be separated to obtain single main antennas which can be used in a RFID device according to the present disclosure. By using such an "endless" structure, multiple antennas may be efficiently produced. The "endless" structure may form multiple main antennas in a row beside each other and/or a plurality of main antennas below each other. Consequently, a checkerboard structure of multiple main antennas embedded in a substrate may be obtained to be separated in a next step

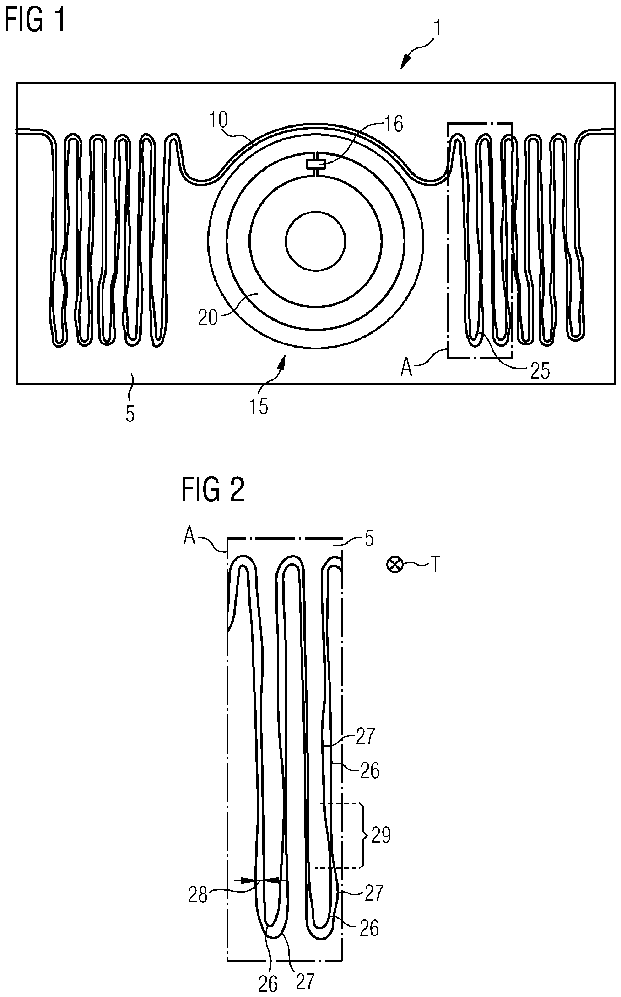

Fig. 1 shows a plan view on an RFID device in accordance with the present disclosure. As shown in Fig. 1, RFID device 1 comprises a substrate 5 in which a main antenna 10 is embedded. The RFID device 1 further comprises a chip module 15 with an integrated circuit 16 and a chip antenna 20. The chip antenna 20 is electrically connected to the integrated circuit 16. The main antenna 10 and the chip antenna 20 are positioned relative to each other such that the main antenna 10 is inductively coupled to the chip antenna 20. The main antenna 10 partly extends in form of a meander on the left and right hand side of the chip module 15. In the exemplary embodiment, the main antenna 10 is formed by two single-strand wires 25 extending adjacent to each other.

Fig. 2 is an enlarged view of section A of the RFID device shown in Fig. 1. Fig. 2 shows a first single-strand wire 26 and a second single-strand wire 27. The first and second single-strand wire 26, 27 extend adjacent to each other but do not extend parallel to each other. The distance 28 between the first and second single-strand wire 26, 27 extending adjacent to each other varies at least partially. In a portion 29 of the main antenna 10, the first and second single-strand wires 26, 27 cross each other, i.e. when viewed in the thickness direction T of the substrate 5 (perpendicular to the paper plane) the first single-strand wire 26 crosses the second single-strand wire 27 such that the first single-strand wire 26 runs below the second single-strand wire 27 from a position on the left hand side to a position on the right hand side of the second single-strand wire 27. Accordingly, the two single-strand wires 26, 27 which are extending adjacent to each other, extend beside each other, above/below each other and may touch each other.

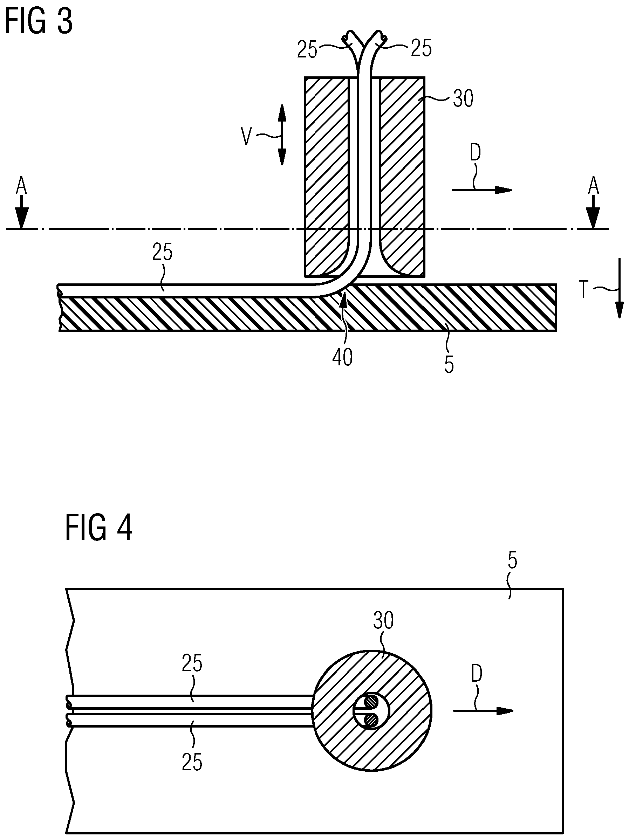

Fig. 3 shows an ultrasonic embedding nozzle 30 while embedding two single-strand wires 25 into a substrate 5. Two single-strand wires 25 pass through the embedding nozzle 30. On the left hand side of Fig. 3, the two single-strand wires 25 extend on a substrate 5 in an embedded manner. A portion 40 of the single-strand wires 25 is in contact with the substrate 5 on one side and with the ultrasonic embedding nozzle 30 on the other side. Double-headed arrow V indicates the direction of the ultrasonic vibrations of the ultrasonic embedding nozzle 30, i.e. the same direction as the thickness direction T. Arrow D indicates the displacing direction of the ultrasonic embedding nozzle 30 to form the main antenna 10.

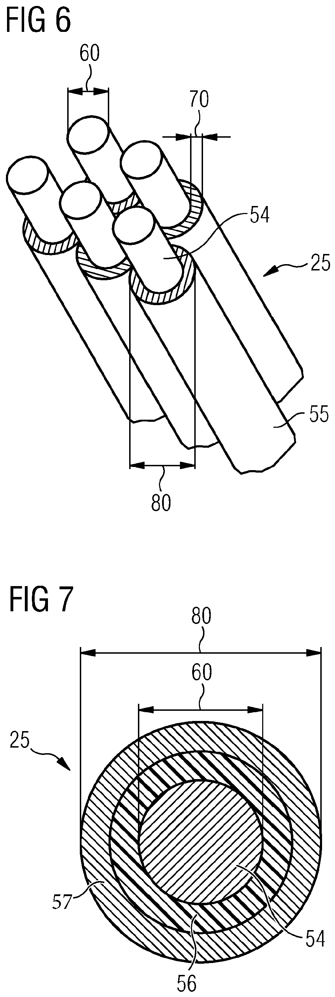

Fig. 4 is a cross sectional view along cut A-A in Fig. 3. Single-strand wires 25 extend beside each other on substrate 5 on the left hand side of the ultrasonic embedding nozzle 30. The single-strand wires 25 comprise the conductor 54, but do not comprise an insulation 55. Optionally, the single strand wires 25 may comprise an insulation 55 (see Fig. 6).

The ultrasonic embedding nozzle 30 shown in Fig. 4 has a circular cross-section though which the multiple single-strand wires pass. Alternatively, the ultrasonic embedding nozzle 30 may have e.g. an oval cross-section or a rectangular shaped cross-section.

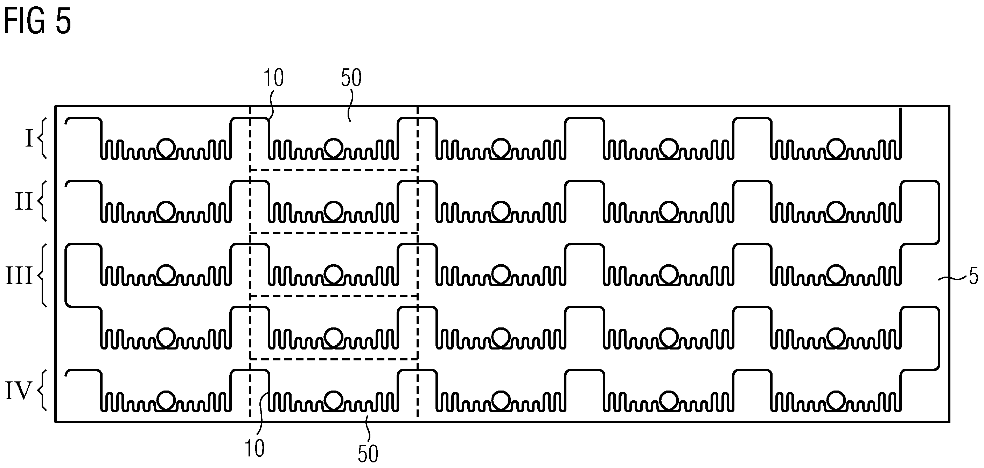

Fig. 5 shows a substrate 5 in which a plurality of main antennas 10 are connected to each other. Fig. 5 shows four rows I, II, III, IV of connected main antennas 10. In each row I, II, III, IV, five main antennas 10 are positioned beside each other. Further, rows II, III, IV are connected such that the multiple main antennas 10 of rows II, III, IV are integrally formed. A dotted line in Fig. 5 indicates cutting lines where the substrate 5 and the connected main antennas may be separated to form separated parts 50 which comprise a single main antenna 10.

Fig. 6 shows five single-strand wires 25 which are positioned adjacent to each other. Each one of the multiple single-strand wires 25 has the outer diameter 80 and comprises a conductor 54 with a conductor diameter 60. Further, each one of the multiple single-strand wires 25 comprises an insulation 55 with the thickness 70. The insulation may comprise a base coating layer and/or a bond coating layer. In Fig. 6 the insulation 55 is illustrated in a sectional view partially exposing the conductor 54. The arrangement of the five single-strand wires 25 as shown in Fig. 6 may correspond to the state in which the five single-strand wires 25 are fed into the nozzle and/or the state in which the five single-strand wires 25 exit the ultrasonic embedding nozzle 30. This arrangement do not need to be a fixed, but a random position of the five single-strand wires 25 exiting the embedding nozzle 30 may even be better as it will reduce the cross coupling in-between the wires. Therefore, no kind of alignment devices at the entrance or exit of the nozzle is required allowing the use of standard or existing production tools.

Fig. 7 shows the cross-section of a single-strand wire 25. The single strand wire has the outer diameter 80 and comprises a conductive core 54, a thermoset base coating 56 and a thermosoft bond coating 57. The base coating 56 surrounds the conductive core 54. The thermosoft bond coating 57 surrounds the thermoset base coating 56.

### Industrial applicability

With reference to Fig. 3, the method of producing a main antenna of an RFID device is explained.

Two single-strand wires 25 are fed in an ultrasonic embedding nozzle 30. The ultrasonic embedding nozzle 30 is positioned such that the two single-strand wires 25 which are exiting the embedding nozzle 30 are positioned on or close to the substrate 5. The ultrasonic embedding nozzle applies ultrasonic vibrations V to the portions 40 of the multiple single-strand wires 25 which have exited the embedding nozzle 30. The direction of the ultrasonic vibrations corresponds to the thickness direction T of the substrate 5. Due to the ultrasonic vibrations the substrate 5 below the portions 40 melt and the wires 25 are embedded in the substrate 5. The embedding nozzle 30 moves in a direction D perpendicular to the vibration direction V, while simultaneously passing the multiple single-strand wires through the embedding nozzle and simultaneously embedding the portions 40 of the multiple single-strand wires 25 into the substrate 5. The embedding nozzle 30 is moved such that a main antenna 10 or multiple connected main antennas 10 are formed. In case of the forming of multiple antennas 10 which are connected to each other, in a further step the connected main antennas 10 may be separated.

Although the preferred embodiments of this invention have been described herein, improvements and modifications may be incorporated without departing from the scope of the invention

## Claims

1. An RFID device (1) comprising:
- a substrate (5),
- a main antenna (10) embedded in the substrate (5), and
- a chip module (15) including an integrated circuit (16) and a chip antenna (20) electrically connected to the integrated circuit (16), wherein
the main antenna (10) is inductively coupled to the chip antenna (20) and formed by multiple single-strand wires (25), **characterized in that**
each one of the multiple single-strand wires (25) comprises an insulation (55) and
at least two single-strand wires (26, 27) of the multiple single-strand wires (25) at least partially overlap each other when viewed in a thickness direction (T) of the substrate (5).

2. The RFID device (1) according to claim 1, wherein a distance (28) between two single-strand wires (26, 27) of the multiple single-strand wires (25) at least partially varies.

3. The RFID device (1) according to any one of the preceding claims, wherein the multiple single-strand wires (25) have a same diameter (80) and the maximum distance between single-strand wires (26, 27) of the multiple single-strand wires (25) is smaller than twice a diameter (80) of the single-strand wires (26, 27).

4. The RFID device (1) according to any one of the preceding claims, wherein the main antenna (10) is formed by two to five single-strand wires (25).

5. The RFID device (1) according to any one of the preceding claims, wherein the main antenna (10) includes a meander form or a zic-zac structure.

6. The RFID device (1) according to any one of the preceding claims, wherein the embedded wire length of the main antenna (10) is in the range of 1.5 cm to 38 cm.

7. The RFID device (1) according any one of the preceding claims, wherein at least one of the multiple single-strand wires (25) comprises an inner conductor (54) and an insulation (55) including a thermo-adherent coating (57), the thickness (70) of the insulation and/or the thermo-adherent coating (57) being 5% to 15% of the diameter (60) of the conductor (54).

8. The RFID device (1) according to claim 7, wherein the conductor (54) has a substantially constant diameter (60) in the range from 30µm to 150µm diameter.

9. A method of manufacturing a main antenna (10) of an RFID device (1) comprising:
- providing a substrate (5),
- providing multiple single-strand wires (25), and
- forming the main antenna (10) by simultaneously embedding the multiple single-strand wires (25) into the substrate (5) by means of ultrasonic vibrations (V).

10. The method according to claim 9, further comprising:
displacing (D) a wire guiding device (30) along the surface (35) of the substrate (5) while simultaneously passing the multiple single-strand wires (25) through the wire guiding device (30), such that the main antenna (10) is formed.

11. The method according to claim 10, wherein the wire guiding device (30) comprises a single ultrasonic embedding nozzle.

12. The method according to one of claims 9 to 11, wherein a plurality of main antennas (10) connected to each other is formed.

13. The method according to claim 12, further comprising the step of separating the plurality of main antennas (10).

14. The method according to claim 9, wherein the forming of the main antenna (10) is performed using an ultrasonic tool comprising a single ultrasonic embedding nozzle and wherein the multiple single-strand wires (25) are simultaneously passed through the single ultrasonic embedding nozzle.

## Patentansprüche

1. RFID-Vorrichtung (1), die aufweist:
- ein Substrat (5),
- eine Hauptantenne (10), die in das Substrat (5) eingebettet ist, und
- ein Chipmodul (15), das eine integrierte Schaltung (16) und eine Chipantenne (20), die elektrisch mit der integrierten Schaltung (16) verbunden ist, aufweist, wobei
die Hauptantenne (10) induktiv mit der Chipantenne (20) gekoppelt und durch mehrere Einzelstrangdrähte (25) gebildet ist, **dadurch gekennzeichnet, dass**
jeder der mehreren Einzelstrangdrähte (25) eine Isolierung (55) aufweist und
mindestens zwei Einzelstrangdrähte (26, 27) der mehreren Einzelstrangdrähte (25) einander bei Betrachtung in einer Dickenrichtung (T) des Substrats (5) zumindest teilweise überlappen.

2. RFID-Vorrichtung (1) nach Anspruch 1, wobei ein Abstand (28) zwischen zwei Einzelstrangdrähten (26, 27) der mehreren Einzelstrangdrähte (25) zumindest teilweise variiert.

3. RFID-Vorrichtung (1) nach einem der vorhergehenden Ansprüche, wobei die mehreren Einzelstrangdrähte (25) einen gleichen Durchmesser (80) aufweisen und der maximale Abstand zwischen Einzelstrangdrähten (26, 27) der mehreren Einzelstrangdrähte (25) kleiner als das Zweifache eines Durchmessers (80) der Einzelstrangdrähte (26, 27) ist.

4. RFID-Vorrichtung (1) nach einem der vorhergehenden Ansprüche, wobei die Hauptantenne (10) durch zwei bis fünf Einzelstrangdrähte (25) gebildet ist.

5. RFID-Vorrichtung (1) nach einem der vorhergehenden Ansprüche, wobei die Hauptantenne (10) eine Mäanderform oder eine Zickzackstruktur aufweist.

6. RFID-Vorrichtung (1) nach einem der vorhergehenden Ansprüche, wobei die eingebettete Drahtlänge der Hauptantenne (10) in dem Bereich von 1,5 cm bis 38 cm liegt.

7. RFID-Vorrichtung (1) nach einem der vorhergehenden Ansprüche, wobei mindestens einer der mehreren Einzelstrangdrähte (25) einen Innenleiter (54) und eine Isolierung (55), die eine thermoadhäsive Beschichtung (57) aufweist, aufweist, wobei die Dicke (70) der Isolierung und/oder der thermoadhäsiven Beschichtung (57) 5 % bis 15 % des Durchmessers (60) des Leiters (54) beträgt.

8. RFID-Vorrichtung (1) nach Anspruch 7, wobei der Leiter (54) einen im Wesentlichen konstanten Durchmesser (60) in dem Bereich von 30 µm bis 150 µm Durchmesser aufweist.

9. Verfahren zur Herstellung einer Hauptantenne (10) einer RFID-Vorrichtung (1), das aufweist:
- Bereitstellen eines Substrats (5),
- Bereitstellen mehrerer Einzelstrangdrähte (25), und
- Bilden der Hauptantenne (10) durch gleichzeitiges Einbetten der mehreren Einzelstrangdrähte (25) in das Substrat (5) mittels Ultraschallschwingungen (V).

10. Verfahren nach Anspruch 9, das ferner aufweist:
Verschieben (D) einer Drahtführungsvorrichtung (30) entlang der Oberfläche (35) des Substrats (5) bei gleichzeitigem Hindurchführen der mehreren Einzelstrangdrähte (25) durch die Drahtführungsvorrichtung (30), sodass die Hauptantenne (10) gebildet wird.

11. Verfahren nach Anspruch 10, wobei die Drahtführungsvorrichtung (30) eine einzelne Ultraschall-Einbettdüse aufweist.

12. Verfahren nach einem der Ansprüche 9 bis 11, wobei eine Mehrzahl von Hauptantennen (10), die miteinander verbunden sind, gebildet wird.

13. Verfahren nach Anspruch 12, das ferner den Schritt des Trennens der Mehrzahl von Hauptantennen (10) aufweist.

14. Verfahren nach Anspruch 9, wobei das Bilden der Hauptantenne (10) unter Verwendung eines Ultraschallwerkzeugs, das eine einzelne Ultraschall-Einbettdüse aufweist, durchgeführt wird und wobei die mehreren Einzelstrangdrähte (25) gleichzeitig durch die einzelne Ultraschall-Einbettdüse hindurchgeführt werden.

## Revendications

1. Un dispositif d'identification par radiofréquence, anglais : *radio frequency identification*, RFID, (1) comprenant :
- un substrat (5),
- une antenne principale (10) incorporée dans le substrat (5), et
- un module de puce (15) comprenant un circuit intégré (16) et une antenne de puce (20) connectée électriquement au circuit intégré (16), dans lequel
l'antenne principale (10) est couplée de manière inductive à l'antenne de puce (20) et formée par de multiples fils monobrins (25), **caractérisé en ce que**
chacun des multiples fils monobrins (25) comprend un isolant (55) et
au moins deux fils monobrins (26, 27) des multiples fils monobrins (25) se chevauchent au moins partiellement l'un l'autre lorsqu'ils sont vus dans une direction d'épaisseur (T) du substrat (5).

2. Le dispositif RFID (1) selon la revendication 1, dans lequel une distance (28) entre deux fils monobrins (26, 27) des multiples fils monobrins (25) varie au moins partiellement.

3. Le dispositif RFID (1) selon l'une quelconque des revendications précédentes, dans lequel les multiples fils monobrins (25) ont un même diamètre (80) et la distance maximale entre des fils monobrins (26, 27) des multiples fils monobrins (25) est inférieure au double d'un diamètre (80) des fils monobrins (26, 27).

4. Le dispositif RFID (1) selon l'une quelconque des revendications précédentes, dans lequel l'antenne principale (10) est formée par deux à cinq fils monobrins (25).

5. Le dispositif RFID (1) selon l'une quelconque des revendications précédentes, dans lequel l'antenne principale (10) comprend une forme de méandre ou une structure en zigzag.

6. Le dispositif RFID (1) selon l'une quelconque des revendications précédentes, dans lequel la longueur de fil incorporé de l'antenne principale (10) est dans la plage de 1,5 cm à 38 cm.

7. Le dispositif RFID (1) selon l'une quelconque des revendications précédentes, dans lequel au moins l'un des multiples fils monobrins (25) comprend un conducteur interne (54) et un isolant (55) comprenant un revêtement thermocollant (57), l'épaisseur (70) de l'isolant et/ou du revêtement thermocollant (57) étant de 5 % à 15 % du diamètre (60) du conducteur (54).

8. Le dispositif RFID (1) selon la revendication 7, dans lequel le conducteur (54) a un diamètre (60) sensiblement constant dans la plage de 30 µm à 150 µm de diamètre.

9. Un procédé de fabrication d'une antenne principale (10) d'un dispositif d'identification par radiofréquence, anglais : *radio frequency identification*, RFID, (1) comprenant :
- la fourniture d'un substrat (5),
- la fourniture de multiples fils monobrins (25), et
- la formation de l'antenne principale (10) en incorporant simultanément les multiples fils monobrins (25) dans le substrat (5) au moyen de vibrations ultrasoniques (V).

10. Le procédé selon la revendication 9, comprenant en outre :
le déplacement (D) d'un dispositif de guidage de fil (30) le long de la surface (35) du substrat (5) tout en faisant passer simultanément les multiples fils monobrins (25) à travers le dispositif de guidage de fil (30), de telle sorte que l'antenne principale (10) soit formée.

11. Le procédé selon la revendication 10, dans lequel le dispositif de guidage de fil (30) comprend une buse unique d'incorporation par ultrasons.

12. Le procédé selon l'une des revendications 9 à 11, dans lequel une pluralité d'antennes principales (10) connectées les unes aux autres est formée.

13. Le procédé selon la revendication 12, comprenant en outre l'étape de séparation de la pluralité d'antennes principales (10).

14. Le procédé selon la revendication 9, dans lequel la formation de l'antenne principale (10) est effectuée à l'aide d'un outil à ultrasons comprenant une buse unique d'incorporation par ultrasons et dans lequel les multiples fils monobrins (25) sont passés simultanément à travers la buse unique d'incorporation par ultrasons.
